# EUROPEAN PATENT APPLICATION

(11) **EP 4 507 311 A1**
(43) Date of publication of application: **12.02.2025**
(21) Application number: 23867015.2
(22) Date of filing: 16.06.2023
(51) Int. Cl.: H04N 21/233

(54) **DATA TRANSMISSION METHODS, APPARATUS, ELECTRONIC DEVICE, AND STORAGE MEDIUM**

(30) Priority: 19.09.2022 CN 202211139880
(71) Applicant: Tencent Technology (Shenzhen) Company Limited, Shenzhen, Guangdong 518057 (CN)
(72) Inventor: JIA, Yuhang, Shenzhen, Guangdong 518057 (CN)
(74) Representative: Gunzelmann, Rainer
(86) International application number: PCT/CN2023/100759
(87) International publication number: WO 2024/060719

(57) **Abstract**

This application provides a data transmission method and apparatus, an electronic device, and a storage medium, and relates to the field of data transmission technologies. In this method, a first server receives a request message transmitted by a second server, the request message being configured for requesting an audio data stream or a video data stream, and the request message including identifier information of a terminal device; configures a code rate for transmission of the audio data stream or a code rate for transmission of the video data stream according to the request message and a bandwidth detection result; and transmits the audio data stream to the terminal device according to the code rate and a data transmission protocol of the audio data stream, or transmits the video data stream to the terminal device according to the code rate and a data transmission protocol of the video data stream. In this method, the code rate for the transmission of the data stream is configured through the request message and the bandwidth detection result, which improves experience quality of a user when watching a panoramic video and can reducing network resources.

## Description

### RELATED APPLICATION

This application claims priority to Chinese Patent Application No. 202211139880.1, filed with the China National Intellectual Property Administration on September 19, 2022 and entitled "DATA TRANSMISSION METHOD AND APPARATUS, ELECTRONIC DEVICE, AND STORAGE MEDIUM", which is incorporated herein by reference in its entirety.

### FIELD OF THE TECHNOLOGY

This application relates to the field of communication, and specifically, to a data transmission method and apparatus, an electronic device, and a storage medium.

### BACKGROUND OF THE DISCLOSURE

Different from a conventional video with a single perspective, a panoramic video allows a user to watch freely in 360 degrees. On this basis, a VR panoramic video further allows the user to move freely while watching the video, providing a 360-degree free perspective at any position in a scene. When watching the panoramic video, the user follows video content to immerse in a highly realistic scene and gain an unprecedented experience. Because of this, the panoramic video is more popular. To provide the user with a good experience, a high code rate is generally used to transmit the panoramic video, which requires high network resources. Therefore, how to transmit the panoramic video to allow the user to obtain better experience quality when watching the panoramic video, and reduce network resources is a problem that needs to be solved urgently.

### SUMMARY

Embodiments of this application provide a data transmission method, which reduces network resources and improves experience of a user when watching a panoramic video.

According to a first aspect, an embodiment of this application provides a data transmission method, and the method is applied to a first server and includes: receiving a request message transmitted by a second server, the request message being configured for requesting an audio data stream or a video data stream, and the request message including identifier information of a terminal device; configuring a code rate for transmission of the audio data stream or a code rate for transmission of the video data stream according to the request message and a bandwidth detection result; and transmitting the audio data stream to the terminal device according to the code rate and a data transmission protocol of the audio data stream, or transmitting the video data stream to the terminal device according to the code rate and a data transmission protocol of the video data stream.

According to a second aspect, an embodiment of this application provides a data transmission method, and the method is applied to a second server and includes: receiving a first request message configured for requesting a data stream transmitted by a terminal device, the first request message including motion data of the terminal device; determining perspective information of the terminal device according to the motion data of the terminal device; determining code rate information of the data stream according to the perspective information; and transmitting a second request message to a first server, the second request message including the code rate information and the perspective information, and the second request message further including identifier information of the terminal device.

According to a third aspect, an embodiment of this application provides a data transmission apparatus, including:
a transceiver unit, configured to receive a request message transmitted a second server, the request message being configured for requesting an audio data stream or a video data stream, and the request message including identifier information of a terminal device;
a processing unit, configured to configure a code rate for transmission of the data stream according to the request message and a bandwidth detection result; and
the transceiver unit being further configured to transmit the data stream to the terminal device according to the code rate and a data transmission protocol.

According to a fourth aspect, an embodiment of this application provides a data transmission apparatus, including:
a transceiver unit, configured to receive a first request message configured for requesting a data stream transmitted by a terminal device, the first request message including motion data of the terminal device;
a processing unit, configured to determine perspective information of the terminal device according to the motion data of the terminal device,
the processing unit being further configured to determine code rate information of the data stream according to the perspective information; and
the transceiver unit being further configured to transmit a second request message to a first server, and the second request message including the code rate information and the perspective information, and the second request message further including identifier information of the terminal device.

According to a fifth aspect, an embodiment of this application provides an electronic device, including:
a processor, adapted to execute computer instructions; and
a memory, having the computer instructions stored therein, the computer instructions being adapted to be loaded by the processor and perform the method in the first aspect.

According to a sixth aspect, an embodiment of this application provides a computer-readable storage medium, having computer instructions stored therein, the computer instructions being read and executed by a processor of a computer device to cause the computer device to perform the method in the first aspect.

According to a seventh aspect, an embodiment of this application provides a computer program product or a computer program, the computer program product or the computer program including computer instructions, the computer instructions being stored in a computer-readable storage medium. A processor of a computer device reads the computer instructions from the computer-readable storage medium, and executes the computer instructions, so that the computer device performs the method in the first aspect.

Through the foregoing technical solution, the first server determines the code rate of the transmitted video data stream or audio data stream according to the request message transmitted by the second server and the bandwidth detection result, and transmits the video data stream or the audio data stream to the terminal device according to the determined code rate and the data transmission protocol of the transmitted video data stream or audio data stream, to improve the user experience. In addition, separate transmission of the video data stream or the audio data stream can reduce occupancy of network resources.

### BRIEF DESCRIPTION OF THE DRAWINGS

FIG. 1 is an optional schematic diagram of a system architecture according to an embodiment of this application.
FIG. 2 is an optional schematic diagram of a system architecture according to an embodiment of this application.
FIG. 3 is a schematic flowchart of a data transmission method according to an embodiment of this application.
FIG. 4 is a schematic flowchart of a data transmission method according to an embodiment of this application.
FIG. 5 is a schematic flowchart of a data transmission method according to an embodiment of this application.
FIG. 6 is a schematic flowchart of a data transmission method according to an embodiment of this application.
FIG. 7 is a schematic block diagram of an apparatus according to an embodiment of this application.
FIG. 8 is a schematic block diagram of an apparatus according to an embodiment of this application.
FIG. 9 is a schematic block diagram of an apparatus according to an embodiment of this application.
FIG. 10 is a schematic block diagram of an electronic device according to an embodiment of this application.

### DESCRIPTION OF EMBODIMENTS

The following clearly and completely describes technical solutions in embodiments of this application with reference to accompanying drawings in the embodiments of this application.

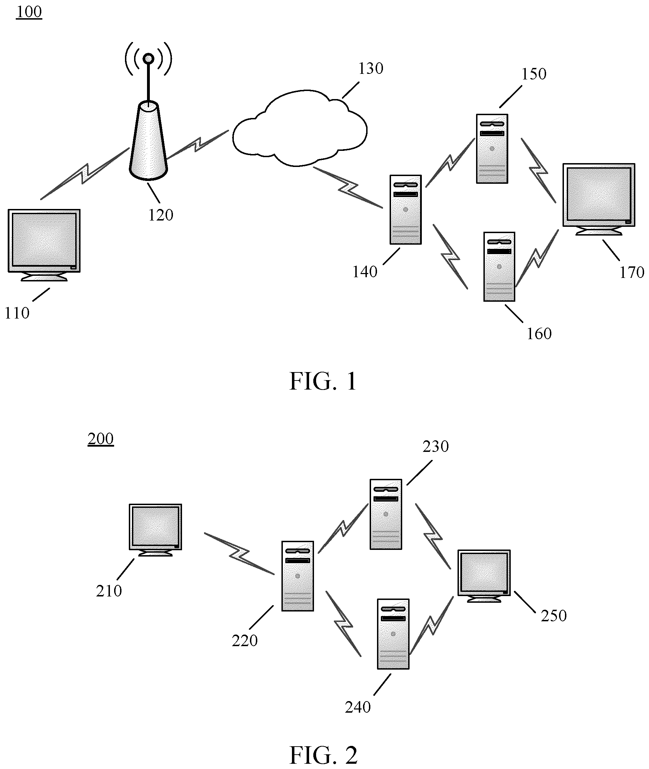

FIG. 1 is an optional schematic diagram of a system architecture 100 according to an embodiment of this application. As shown in FIG. 1, the system architecture 100 includes a second terminal 110, a communication device 120, a core network device 130, a server 140, an audio streaming server 150, a video streaming server 160, and a first terminal 170, where different devices can perform communication and interaction through a wired or wireless method.

The second terminal 110 may be a device that displays a panoramic video, such as a virtual reality (VR) device, an augmented reality (AR) device, a mixed reality (MR) device, or a similar device. For example, the VR device may be a device that applies a VR technology, such as VR glasses, or a VR headset; the AR device may be a device that applies an AR technology, such as AR glasses, an AR TV, or an AR headset; and the MR device may be a device that applies a VR technology, such as MR glasses, an MR terminal, an MR headset, or an MR wearable device, which are not limited therein. For example, the second terminal may alternatively be a (cloud) server with a display function.

The communication device 120 mainly refers to an active communication device that can serve as a transmitting source, which is an access device for a terminal to access a network through the wireless method, and is mainly responsible for wireless resource management, quality of service (QoS) management, data compression and encryption, and the like on an air interface side, for example, a base station NodeB, an evolved base station eNodeB, a base station in a 5G mobile communication system or a new radio (NR) communication system, or a base station in a future mobile communication system.

The core network device 130 is responsible for processing forwarding information, and may include a 4G/5G core network or another gateway, such as a user plane function (UPF), an access and mobility management function (AMF), a session management function (SMF), or a policy control function (PCF).

The server 140 is responsible for receiving code rate information and motion data transmitted by the second terminal 110. The server 140 may determine perspective information of the second terminal 110 according to the motion data.

The audio streaming server 150 is responsible for receiving an audio stream, and allowing the second terminal 110 and the server 140 to pull the audio stream.

The video streaming server 160 is responsible for receiving a video stream, and allowing the second terminal 110 and the server 140 to pull the video stream.

The second terminal device 110 and servers, such as the server 140, the audio streaming server 150, and the video streaming server 160, may not be in a same local area network.

The server 140, the audio streaming server 150, and the video streaming server 160 may be cloud servers. The cloud server may be a cloud server that can provide basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform.

The first terminal 170 may be a device that captures a video or an image, such as a camera, a sensor, a millimeter wave radar, a lidar, a PC, or a (cloud) server. The first terminal transmits a local high-resolution panoramic video to the audio streaming server 150 and the video streaming server 160.

FIG. 2 is an optional schematic diagram of another system architecture 200 according to an embodiment of this application. As shown in FIG. 2, the system architecture 200 includes a second terminal 210, a server 220, an audio streaming server 230, a video streaming server 240, and a first terminal 250.

For the system architecture 200 including the second terminal 210, the server 220, the audio streaming server 230, the video streaming server 240, and the first terminal 250, refer to the system architecture 100 including the second terminal 110, the server 120, the audio streaming server 130, the video streaming server 140, and the first terminal 170 for understanding. The system architecture 200 is an exemplary system architecture diagram of devices in the same local area network.

In a current 360-degree video transmission process, to obtain a better viewing experience, data needs to be transmitted at a high code rate. The code rate is a quantity of data bits transmitted per unit time during data transmission. A generally used unit is kbps, that is, thousands bits per second. In a case of a particular resolution, the code rate is in direct proportion to definition: A higher code rate indicates a clearer image; and a lower code rate indicates a less clear image. However, when the data is transmitted at a high code rate, more network resources are occupied. Due to changes in a head of a user, a perspective of the user often changes. Therefore, how to select, from different perspectives, a code rate to transmit audio and video information under different network bandwidths is a problem that needs to be solved urgently.

Therefore, this application provides a data transmission method, applied to a server. The server is a server that transmits a video data stream or an audio data stream to a terminal device. The first server may determine a code rate of the transmitted video data stream or audio data stream according to perspective information and/or code rate information, and a bandwidth detection result, and transmit the video data stream or the audio data stream to the terminal device according to the determined code rate and a data transmission protocol of the transmitted video data stream or audio data stream, to improve user experience.

The following describes the solutions provided in the embodiments of this application with reference to the accompanying drawings.

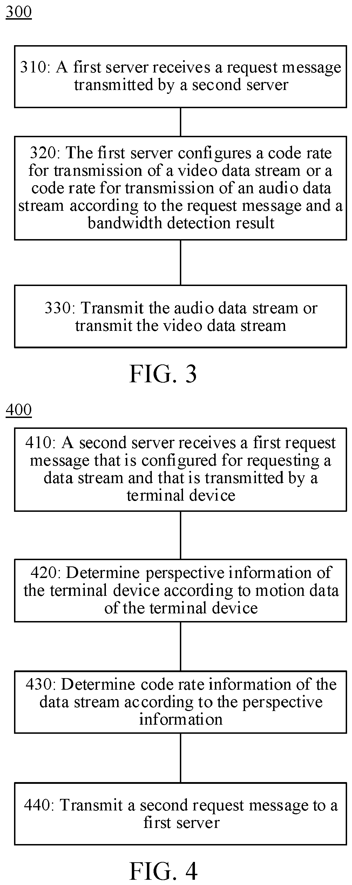

FIG. 3 is a schematic flowchart of a data transmission method 300 according to an embodiment of this application. The method 300 may be performed by any electronic device with a data processing capability. For example, the electronic device may be implemented as a server or a computer. The following uses an example in which the electronic device is a first server for description. As shown in FIG. 3, the method 300 may include operations 310 to 330.

310: The first server receives a request message transmitted by a second server, the request message being configured for requesting an audio data stream or a video data stream, and the request message including identifier information of a terminal device.

320: The first server configures a code rate for transmission of the audio data stream or a code rate for transmission of the video data stream according to the request message and a bandwidth detection result.

330: The first server transmits the audio data stream to the terminal device according to the code rate and a data transmission protocol of the audio data stream, or transmits the video data stream to the terminal device according to the code rate and a data transmission protocol of the video data stream.

The first server may be a video streaming server or an audio streaming server, which is related to a function provided by the first server. Certainly, the first server may be a video streaming server and an audio streaming server at the same time, but the video stream and the audio stream are processed and transmitted separately.

The first server may determine a code rate of a transmitted data stream according to the request message and the bandwidth detection result, and transmit the data stream to the terminal device according to the determined transmission code rate and a data transmission protocol of the data stream, to improve the user experience. In addition, the video data stream and the audio data stream are transmitted separately, which reduces occupancy of network resources. The bandwidth detection result refers to the measurement obtained by testing the transmission capability of the bandwidth used for the current data transmission, such as the maximum available upstream bandwidth or the maximum available downstream bandwidth.

In some embodiments, the first server is the video streaming server, the request message is configured for requesting the video data stream, the request message further includes perspective information, the request message is configured for requesting a video stream from the first server, and the configuring a code rate for transmission of the data stream according to the request message and a bandwidth detection result includes: configuring a transmission code rate of a first data stream as a first code rate according to the perspective information and the bandwidth detection result, the first data stream being a data stream within a first perspective range threshold; and configuring a transmission code rate of a second data stream as a second code rate according to the perspective information and the bandwidth detection result, the second data stream being a data stream outside the first perspective range threshold, and the first code rate being greater than the second code rate.

Specifically, a perspective of the user is a region. In a perspective region, the user is more sensitive to an image in a center region of the perspective, but not sensitive enough to an image in an edge region of the perspective. Therefore, according to the perspective information and the bandwidth detection result, the transmission code rate of the corresponding first data stream within the first perspective range threshold is configured as the first code rate, and the transmission code rate of the corresponding second data stream outside the first perspective range threshold is configured as the second code rate. The first code rate is greater than the second code rate, that is, the first data stream is transmitted at a high code rate, and the second data stream is transmitted at a low code rate. According to the perspective information and the bandwidth detection result, data streams in different regions within a perspective range are transmitted at different code rates, which can reduce an occupancy rate of network resources when ensuring the user experience.

In a case that the bandwidth is sufficient, the transmission code rate of the corresponding second data stream outside the first perspective range threshold may also be appropriately increased, so that the user can obtain better viewing quality.

The first code rate and the second code rate determined by the first server is to be within a range supported by the terminal device. For example, a code rate range supported by the terminal device is agreed in advance, and the first server may configure, within the code rate range, the transmission code rate of the corresponding first data stream within the first perspective range threshold as the first code rate, and configure the transmission code rate of the corresponding second data stream outside the first perspective range threshold as the second code rate.

In some embodiments, the first server is the video streaming server, the request message is configured for requesting the video data stream, the request message further includes perspective information and code rate information, the request message is configured for requesting a video stream from the first server, and the configuring a code rate for transmission of the data stream according to the request message and a bandwidth detection result includes: configuring a transmission code rate of a first data stream as a first code rate according to the perspective information, the code rate information, and the bandwidth detection result, the first data stream being a data stream within a first perspective range threshold; and configuring a transmission code rate of a second data stream as a second code rate according to the perspective information, the code rate information, and the bandwidth detection result, the second data stream being a data stream outside the first perspective range threshold, and the first code rate being greater than the second code rate.

Specifically, the request message may include the code rate information requested by the terminal device. The first server may determine the code rate transmission of the video data stream based on the code rate information requested by the terminal device, to avoid the terminal device not supporting the code rate information used by the first server. Therefore, according to the perspective information, the code rate information, and the bandwidth detection result, the transmission code rate of the corresponding first data stream within the first perspective range threshold is configured as the first code rate, and the transmission code rate of the corresponding second data stream outside the first perspective range threshold is configured as the second code rate. The first code rate is greater than the second code rate, that is, the first data stream is transmitted at a high code rate, and the second data stream is transmitted at a low code rate. According to the perspective information, the code rate information, and the bandwidth detection result, within a code rate range supported by the terminal device, data streams in different regions within a perspective range are transmitted at different code rates, which can reduce an occupancy rate of network resources when ensuring the user experience.

In some embodiments, the video data stream includes a plurality of video frames. For video frames, the first data transmission protocol that meets the video frame transmission conditions is adopted to reduce content loss during the transmission process of video frames. In this case, different video frame types are each matched with a data transmission protocol that is appropriate for their type. Each of the plurality of video frames includes an I frame, a B frame, and a P frame, where a data transmission protocol configured for the I frame is a transmission control protocol (TCP), and a data transmission protocol configured for the B frame and the P frame is a user datagram protocol (UDP).

Specifically, the video frame is divided into the I frame, the B frame, and the P frame. The I frame is an intra-coded frame, also referred to as a key frame; and the P frame is a forward prediction frame, also referred to as a forward reference frame, and the B frame is a bidirectional interpolation frame, also referred to as a bidirectional reference frame. Simply, the I frame is a complete picture, while the P frame and the B frame record changes relative to the I frame. Without the I frame, the P frame and the B frame cannot be decoded. To improve the viewing quality of the user, the I frame is transmitted through a separate channel and transmitted using the TCP, to ensure that frames are not lost in a transmission process, and avoid phenomena such as mosaics and blurring in the video; and the B frame and the P frame are transmitted through a UDP data channel, and forward error correction (FEC) redundancy is performed according to a network detection condition.

In some embodiments, the first server is the audio streaming server, the request message is configured for requesting the audio data stream, the request message includes code rate information, and the configuring a code rate for transmission of the data stream according to the request message and a bandwidth detection result includes: configuring a transmission code rate of the audio data stream as a third code rate according to the code rate information and the bandwidth detection result.

The third code rate may be a low code rate or a high code rate.

In some embodiments, for audio frames, a second data transmission protocol that meets the transmission conditions of audio frames is adopted to reduce content loss during the transmission process of audio and video frames. For example, the data transmission protocol for audio frames in the audio stream is the Transmission Control Protocol (TCP).

In some embodiments, the data stream includes a time identifier.

Specifically, when the first server is the video streaming server, the data stream is the video data stream, and the video data stream includes a time identifier; or when the first server is the audio streaming server, the data stream is the audio data stream, and the audio data stream includes a time identifier. The time identifier included in the data stream is suitable for audio and video synchronization on a terminal device side.

In some embodiments, the first server detects a downlink bandwidth of the first server and the terminal device to obtain the bandwidth detection result.

The downlink refers to a process in which the first server transmits the data stream to the terminal device.

FIG. 4 is a schematic flowchart of a data transmission method 400 according to an embodiment of this application. The method 400 may be performed by any electronic device with a data processing capability. For example, the electronic device may be implemented as a server or a computer. The following uses an example in which the electronic device is a second server, which is mainly configured to determine a perspective of a user according to motion data transmitted by a terminal device. As shown in FIG. 4, the method 400 may include operations 410 to 440.

410: The second server receives a first request message that is configured for requesting a data stream and that is transmitted by the terminal device, the first request message including the motion data of the terminal device.

420: The second server determines perspective information of the terminal device according to the motion data of the terminal device.

430: The second server determines code rate information of the data stream according to the perspective information.

440: The second server transmits a second request message to a first server, the second request message including the code rate information, the perspective information, and identifier information of the terminal device.

The second server receives the first request message transmitted by the terminal device and transmits the second request message to the first server. The second request message includes the code rate information and the perspective information, so that the first server can determine the code rate of the transmitted data stream according to the perspective information, the code rate information, and the bandwidth detection result, and transmit the data stream to the terminal device according to the determined code rate of the transmitted data stream, to improve user experience.

In some embodiments, the first request message further includes video code rate information, and the determining code rate information of the data stream according to the perspective information includes: determining the code rate information of the data stream according to the perspective information and the video code rate information.

Specifically, the first request message transmitted by the terminal device received by the second server is configured for requesting the video stream. The first request message includes the video code rate information. The video code rate information may be a code rate range. The second server may determine, according to the perspective information, a piece of code rate information within a range indicated by the video code rate information.

In some embodiments, the first request message further includes audio code rate information and video code rate information, and the determining code rate information of the data stream according to the perspective information includes: determining video code rate information of the data stream according to the perspective information and the video code rate information. The method further includes: determining audio code rate information of the data stream according to the audio code rate information.

Specifically, the first request message transmitted by the terminal device received by the second server is configured for requesting a video stream and an audio stream. The first request message includes the video code rate information. The video code rate information may be a code rate range. The second server may determine, according to the perspective information, a piece of code rate information within a range indicated by the video code rate information. The first request message further includes the audio code rate information. The audio code rate information may be a code rate range. The second server may determine a piece of audio code rate information within the range indicated by the audio code rate information.

Request content of the first request message received by the second server is different. This is because the terminal device may determine, according to a service type, that the first request message is configured for requesting the video stream, or that the first request message is configured for requesting the video stream and the audio stream. For example, when a running service audio of the terminal device may be ignored, the first request message is configured for requesting the video stream. For example, in a remote driving scenario, an audio is not of high concern. When the running service audio of the terminal device cannot be ignored, the first request message is configured for requesting the video stream and the audio stream. For example, in remote video conferencing and live broadcast scenarios, both the audio stream and the video stream are very important.

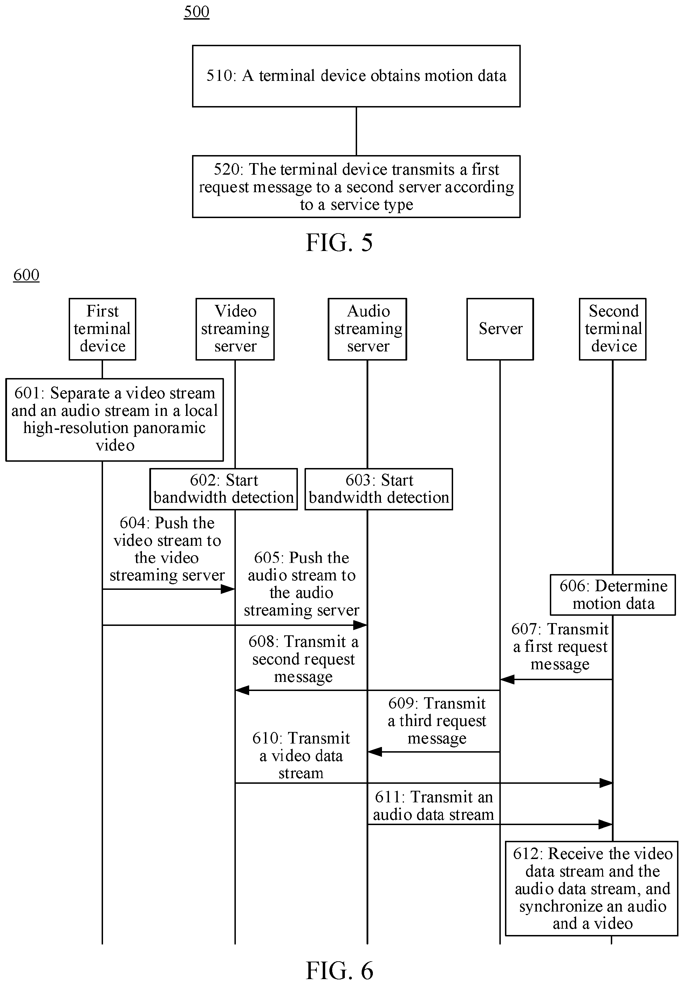

FIG. 5 is a schematic flowchart of a data transmission method 500 according to an embodiment of this application. The method 500 may be performed by any electronic device with a data processing capability. For example, the electronic device may be implemented as a terminal device or a computer. The following uses an example in which the electronic device is the terminal device for description. As shown in FIG. 5, the method 500 may include operations 510 to 530.

510: The terminal device obtains motion data.

The motion data may be that a 6 degree of freedom (6DoF) object has six degrees of freedom in space, that is, degrees of freedom of movement in directions of three rectangular coordinate axes: X, Y, and Z, and degrees of freedom of rotation around the three coordinate axes.

520: The terminal device transmits a first request message to a second server according to a service type, where the first request message is configured for requesting a video stream, or the first request message is configured for requesting a video stream and an audio stream, and the first request message includes the motion data.

The terminal device requests different content from the second server according to the service type, which can effectively alleviate pressure on a transmission bandwidth between the terminal device and a streaming server and improve transmission efficiency.

In some embodiments, the first request message is configured for requesting the video stream, and the first request message further includes video code rate information.

In some embodiments, the first request message is configured for requesting the video stream and the audio stream, and the first request message further includes video code rate information and audio code rate information.

In some embodiments, the method further includes: receiving, by the terminal device, an audio data stream, where the audio data stream includes a time identifier; receiving, by the terminal device, a video data stream, where the video data stream includes a time identifier; and synchronizing, by the terminal device, video data and audio data according to the time identifiers.

In the foregoing FIG. 3 to FIG. 5, the method embodiments of this application are described in detail from a single side perspective. To understand this embodiment of this application more clearly, a data transmission method provided in this embodiment of this application is described below from an interactive perspective through FIG. 6. As shown in FIG. 6, FIG. 6 is a schematic flowchart of a data transmission method 600 according to an embodiment of this application. The method 600 may include operations 601 to 612.

601: A first terminal device separates a video stream and an audio stream in a local high-resolution panoramic video to obtain the audio stream and the video stream.

The audio and the video are processed separately, which can alleviate pressure on the transmission bandwidth between the first terminal device and a streaming server. In addition, a second terminal device may select according to service needs, to improve transmission efficiency.

602: A video streaming server starts bandwidth detection, and identifies and measures a maximum available bandwidth of a current downlink.

The video streaming server may perform bandwidth detection periodically or in real time.

603: An audio streaming server starts bandwidth detection, and identifies and measures a maximum available bandwidth of a current downlink.

The audio streaming server may perform bandwidth detection periodically or in real time.

604: The first terminal device pushes the video stream to the video streaming server.

605: The first terminal device pushes the audio stream to the audio streaming server.

The streaming server is not limited. The streaming server may be one of a real-time streaming protocol (RTSP) server, a real-time messaging protocol (RTMP) server, a hypertext transfer protocol (HTTP) server, or the like.

606: The second terminal device determines motion data

607: The second terminal device transmits a first request message to a server.

The second terminal device transmits the first request message to the server according to a service type, where the first request message is configured for requesting a video stream, or the first request message is configured for requesting a video stream and an audio stream; the first request message includes the motion data; and the first request message further includes video code rate information, or the first request message further includes video code rate information and audio code rate information.

608: The server transmits a second request message configured for requesting a video data stream to the video streaming server, where and the second request message includes perspective information, or the second request message includes perspective information and video stream code rate information.

The server determines the perspective information of the second terminal device based on the motion data of the second terminal device, and determines the video stream code rate information according to the determined perspective information. In addition, a motion server transmits the perspective information and the code rate information to the video streaming server, or the motion server transmits the perspective information to the video streaming server.

609: The server transmits a third request message configured for requesting the audio data stream to the audio streaming server, where the third request message includes audio stream code rate information.

610: The video streaming server determines a code rate for transmission of the video data stream and a video transmission protocol configured for the video data stream according to the second request message and a bandwidth detection result, and transmits the video data stream to the second terminal device.

This operation may be understood with reference to the corresponding paragraph in the method 300, and will not be described again herein.

611: The audio streaming server determines a code rate for transmission of the audio data stream and a video transmission protocol configured for the audio data stream according to the third request message and a bandwidth detection result, and transmits the audio data stream to the second terminal device.

612: The second terminal device receives the video data stream and the audio data stream, synchronizes an audio and a video, and plays the audio and the video.

The principles of synchronization are as follows:

Synchronization is performed based on time identifier information PTS of the audio data stream and the video data stream received by the second terminal device. If there is an audio stream, an audio stream clock is used as a reference clock to synchronize the video stream. For example, if the audio is slow, some video frames are discarded or a delay is increased; and if the video is slow, some non-I frame video frames are discarded.

In a start-up stage, especially for a real-time data stream, since video decoding needs to rely on a first I frame, and the audio may be outputted in real time, the video PTS may be ahead of the audio PTS. In this case, synchronization inevitably causes apparent slow synchronization. A better method to deal with this situation is to discard redundant audio data, to minimize an audio and video gap in the start-up stage.

In the foregoing description, the second terminal device needs to transmit the motion data to the server; and the server determines the perspective information according to the motion data, determines the code rate information, and transmits the request message to the audio streaming server or the video streaming server. When the second terminal device has a computing function, the second terminal device may determine the perspective information and the code rate information according to the motion data, and the second terminal device transmits the request message to the audio streaming server or the video streaming server, where the request message includes the perspective information and/or the code rate information, in other words, the second terminal device may also have a function as the server.

The specific implementations of this application are described in detail above with reference to the accompanying drawings. However, this application is not limited to the specific details in the foregoing implementations, a plurality of simple deformations may be made to the technical solution of this application within a range of the technical concept of this application, and these simple deformations fall within the protection scope of this application. For example, the specific technical features described in the above specific implementations may be combined in any suitable manner without contradiction. To avoid unnecessary repetition, various possible combinations are not further described in this application. In another example, various different implementations of this application may alternatively be combined randomly. Such combinations also need to be considered as the content disclosed in this application provided that these combinations do not depart from the concept of this application.

Sequence numbers of the foregoing processes do not mean execution sequences in various embodiments of this application. The execution sequences of the processes need to be determined according to functions and internal logic of the processes, and do not need to be construed as any limitation on the implementation processes of the embodiments of this application. These sequence numbers may be interchanged in an appropriate condition, so that the embodiments of this application described can be implemented in an order other than those illustrated or described.

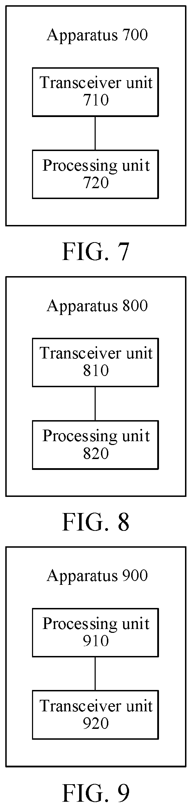

Method embodiments of this application are described in detail above with reference to FIG. 1 to FIG. 6, and apparatus embodiments of this application are described in detail below with reference to FIG. 7 to FIG. 10.

FIG. 7 is a schematic block diagram of an apparatus 700 according to an embodiment of this application, and the apparatus 700 can implement the function of the first server in the foregoing method, that is, the video streaming server or the audio streaming server. As shown in FIG. 7, the apparatus 700 may include a transceiver unit 710 and a processing unit 720.

The transceiver unit 710 is configured to receive a request message transmitted a second server, the request message being configured for requesting an audio data stream or a video data stream, and the request message including identifier information of a terminal device.

The processing unit 720 is configured to configure a code rate for transmission of the audio data stream or a code rate for transmission of the video data stream according to the request message and a bandwidth detection result.

The transceiver unit 710 transmits the audio data stream to the terminal device according to the code rate and a data transmission protocol of the audio data stream, or transmits the video data stream to the terminal device according to the code rate and a data transmission protocol of the video data stream.

In some embodiments, the request message is configured for requesting a video data stream, and the request message further includes perspective information. The processing unit 720 is specifically configured to:
configure a transmission code rate of a first data stream as a first code rate according to the perspective information and the bandwidth detection result, the first data stream being a data stream within a first perspective range threshold; and
configure a transmission code rate of a second data stream as a second code rate according to the perspective information and the bandwidth detection result, the second data stream being a data stream outside the first perspective range threshold, and the first code rate being greater than the second code rate.

In some embodiments, the request message is configured for requesting a video data stream, and the request message further includes perspective information and code rate information. The processing unit 720 is specifically configured to:
configure a transmission code rate of a first data stream as a first code rate according to the perspective information, the code rate information, and the bandwidth detection result, the first data stream being a data stream within a first perspective range threshold; and configure a transmission code rate of a second data stream as a second code rate according to the perspective information, the code rate information, and the bandwidth detection result, the second data stream being a data stream outside the first perspective range threshold, and the first code rate being greater than the second code rate.

In some embodiments, the video data stream includes a plurality of video frames, and each of the plurality of video frames includes an I frame, a B frame, and a P frame, where a data transmission protocol configured for the I frame is a transmission control protocol, and a data transmission protocol configured for the B frame and the P frame is a user datagram protocol.

In some embodiments, the request message is configured for requesting an audio data stream, and the request message further includes code rate information. The processing unit 720 is specifically configured to: configure a transmission code rate of the audio data stream as a third code rate according to the code rate information and the bandwidth detection result.

In some embodiments, the data transmission protocol of the audio data stream is a transmission control protocol.

In some embodiments, the video data stream includes a time identifier, and the audio data stream includes a time identifier.

In some embodiments, the processing unit 720 is further configured to detect a downlink bandwidth of the first server and the terminal device to obtain the bandwidth detection result.

The apparatus embodiments and the method embodiments may correspond to each other. For a similar description, refer to the method embodiments. To avoid repetition, details are not described herein again. Specifically, when the data processing apparatus 700 in this embodiment may correspond to an entity that executes the method 300 of this embodiment of this application, the above and other operations and/or functions of each module in the apparatus 700 are respectively to realize the corresponding process of the method in FIG. 3 and are not repeated herein for brevity.

FIG. 8 is a schematic block diagram of an apparatus 800 according to an embodiment of this application, and the apparatus 800 can implement the function of the second server in the foregoing method, that is, a motion server. As shown in FIG. 8, the apparatus 800 may include a transceiver unit 810 and a processing unit 820.

The transceiver unit 810 is configured to receive a first request message configured for requesting a data stream transmitted by a terminal device, the first request message including motion data of the terminal device.

The processing unit 820 is configured to determine perspective information of the terminal device according to the motion data of the terminal device.

The processing unit 820 is configured to determine code rate information of the data stream according to the perspective information.

The transceiver unit 810 is configured to transmit a second request message to a first server, and the second request message including the code rate information, the perspective information, and identifier information of the terminal device.

In some embodiments, the first request message further includes video code rate information, and
the processing unit 820 is specifically configured to: determine the code rate information of the data stream according to the perspective information and the video code rate information.

In some embodiments, the first request message further includes audio code rate information and video code rate information, and the processing unit is specifically configured to: determine video code rate information of the data stream according to the perspective information and the video code rate information; and
the processing unit 820 is further configured to: determine audio code rate information of the data stream according to the audio code rate information.

The apparatus embodiments and the method embodiments may correspond to each other. For a similar description, refer to the method embodiments. To avoid repetition, details are not described herein again. Specifically, when the data processing apparatus 800 in this embodiment may correspond to an entity that executes the method 400 of this embodiment of this application, the above and other operations and/or functions of each module in the apparatus 800 are respectively to realize the corresponding process of the method in FIG. 4 and are not repeated herein for brevity.

FIG. 9 is a schematic block diagram of an apparatus 900 according to an embodiment of this application, and the apparatus 900 can implement the function of the terminal device in the foregoing method, that is, the second terminal device. As shown in FIG. 9, the apparatus 900 includes a processing unit 910 and a transceiver unit 920.

The processing unit 910 is configured to obtain motion data.

The transceiver unit 920 is configured to transmit a first request message to a second server according to a service type, the first request message is configured for requesting a video stream, or the first request message is configured for requesting a video stream and an audio stream, and the first request message includes the motion data.

In some embodiments, the first request message is configured for requesting a video stream, and the first request message further includes video code rate information.

In some embodiments, the first request message is configured for requesting a video stream and an audio stream, and the first request message further includes video code rate information and audio code rate information.

In some embodiments, the transceiver unit 920 is further configured to: receive an audio data stream, where the audio data stream includes a time identifier; and receive, by the terminal device, a video data stream, where the video data stream includes the time identifier; and the processing unit 910 is further configured to synchronize video data and audio data according to the time identifier.

The apparatus embodiments and the method embodiments may correspond to each other. For a similar description, refer to the method embodiments. To avoid repetition, details are not described herein again. Specifically, when the data processing apparatus 900 in this embodiment may correspond to an entity that executes the method 500 of this embodiment of this application, the above and other operations and/or functions of each module in the apparatus 900 are respectively to realize the corresponding process of the method in FIG. 5 and are not repeated herein for brevity.

The apparatus and the system of the embodiments of this application are described above with reference to the accompanying drawings from a perspective of a functional module. The functional module may be implemented in hardware form, or may be implemented in software form of instructions, or may be implemented through a combination of hardware and software modules. Specifically, the operations of the methods disclosed with reference to the embodiments of this application may be directly performed and completed by using a hardware decoding processor, or may be performed and completed by using a combination of hardware and software modules in the decoding processor. In some embodiments, the software module may be located in a mature storage medium in the art, such as a random access memory, a flash memory, a read-only memory, a programmable read-only memory, an electrically-erasable programmable memory, and a register. The storage medium is located in the memory. The processor reads information in the memory and completes the operations of the foregoing method embodiments in combination with hardware thereof.

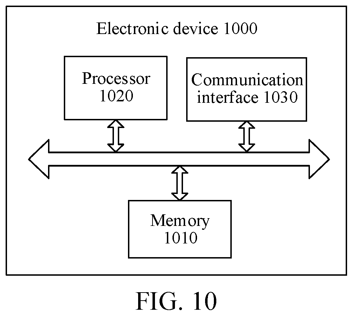

FIG. 10 is a schematic block diagram of an electronic device 1000 according to an embodiment of this application.

As shown in FIG. 10, the electronic device 1000 may include:
a memory 1010 and a processor 1020, where the memory 1010 is configured to store a computer program and transmit program code to the processor 1020. In other words, the processor 1020 may invoke and run the computer program from the memory 1010 to implement the method in the embodiments of this application.

For example, the processor 1020 may be configured to perform the operations of each entity in the foregoing method 300 according to instructions in the computer program.

In some embodiments of this application, the processor 1020 may include, but not limited to:
a general processor, a digital signal processor (DSP), an application-specific integrated circuit (ASIC), a field programmable gate array (FPGA), another programmable logic device, a discrete gate, a transistor logic device, or a discrete hardware component.

In some embodiments of this application, the memory 1010 includes, but not limited to:
a non-volatile and/or volatile memory. The non-volatile memory may be a read-only memory (ROM), a programmable read-only memory(PROM), an erasable programmable read-only memory (EPROM), an electrically erasable programmable read-only memory (EEPROM), or a flash memory. The volatile memory may be a random access memory (RAM) that is used as an external cache. Through example but not limitative description, many forms of RAMs may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchronous link dynamic random access memory (SLDRAM), and a direct rambus dynamic random access memory (DR RAM).

In some embodiments of this application, the computer program may be divided into one or more modules, and the one or more modules are stored in the memory 1010 and executed by the processor 1020 to perform the methods provided in this application. The one or more modules may be a series of computer program instruction segments capable of performing a particular function, and the instruction segments are configured for describing the execution of the computer program in the electronic device 1000.

In some embodiments, the electronic device 1000 may further include:
a communication interface 1030, where the communication interface 1030 may be connected to the processor 1020 or the memory 1010.

The processor 1020 may control the communication interface 1030 to communicate with another device, and specifically, may transmit information or data to another device or receive information or data transmitted by another device. For example, the communication interface 1030 may include a transmitter and a receiver. The transceiver 1030 may further include an antenna, and a quantity of antennas may be one or more.

Various components of the electronic device 1000 are connected to each other by using a bus system. In addition to including a data bus, the bus system further includes a power bus, a control bus, and a status signal bus.

According to an aspect of this application, a communication apparatus is provided, including a processor and a memory. The memory is configured to store a computer program. The processor is configured to invoke and run the computer program stored in the memory, so that an encoder executes the method of the foregoing method embodiments.

According to an aspect of this application, a computer storage medium is provided, where the computer storage medium has a computer program stored therein, and when the computer program is executed by a computer, the method of the foregoing method embodiments can be implemented by the computer. In other words, an embodiment of this application further provides a computer program product including instructions. When the instructions executed by a computer, the computer is caused to perform the method according to the method of the foregoing method embodiments.

According to another aspect of this application, a computer program product or a computer program is provided, including computer instructions, the computer instructions being stored in a computer-readable storage medium. A processor of a computer device reads the computer instructions from the computer-readable storage medium. The processor executes the computer instructions, so that the computer device performs the method in the foregoing method embodiments.

In other words, when software is used to implement the embodiments, the embodiments may be implemented completely or partially in a form of a computer program product. The computer program product includes one or more computer instructions. When the program instruction of the computer is loaded and executed on the computer, all or some of the operations are generated according to the process or function described in the embodiments of this application. The computer may be a general-purpose computer, a special-purpose computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server or data center to another website, computer, server or data center in a wired (for example, a coaxial cable, an optical fiber or a digital subscriber line (DSL)) or wireless (for example, infrared, wireless or microwave) manner. The computer-readable storage medium may be any usable medium accessible by the computer, or a data storage device, for example, a server or a data center, integrating one or more usable media. The available medium may be a magnetic medium (such as a floppy disk, a hard disk, or a magnetic tape), an optical medium (such as a digital video disc (DVD)), a semiconductor medium (such as a solid state disk (SSD)) or the like.

In the embodiments of this application, "B corresponding to A" indicates that B is associated with A. In an implementation, B may be determined according to A. However, determining B according to A does not mean that determining B only according to A, and B may be determined according to A and/or other information.

In the descriptions of this application, unless otherwise described, "at least one" means one or more, and "a plurality of" means two or more than two. In addition, "and/or" describes an association relationship between associated objects and represents that three relationships may exist. For example, A and/or B may represent the following three cases: only A exists, both A and B exist, and only B exists, where A and B may be singular or plural. The character "/" generally represents that the associated object is in an "or" relationship. "At least one of the following items (pieces)" or similar expressions refer to any combination of these items, including any combination of singular items (pieces) or plural items (pieces). For example, at least one of a, b, or c may represent: a, b, c, a-b, a-c, b-c, or a-b-c, where a, b, and c may be single or multiple.

The descriptions such as "first" and "second" in the embodiments of this application are used only to illustrate and distinguish described objects without a specific order, do not indicate that a quantity of devices in the embodiments of this application is particularly limited, and cannot constitute any limitation on the embodiments of this application.

A specific feature, structure, or characteristic described related to the embodiment in the specification is included in at least one embodiment of this application. In addition, these specific features, structures, or characteristics may be combined in one or more embodiments in any appropriate manner.

Moreover, the terms "include", "contain" and any other variants mean to cover the non-exclusive inclusion. For example, a process, method, system, product, or device that includes a list of operations or units is not necessarily limited to those operations or units, but may include other operations or units not expressly listed or inherent to such a process, method, product, or device.

In the specific implementation of this application, user information and other related data may be involved. When the above embodiments of this application are applied to specific products or technologies, permission or consent of the user is required, and the collection, use and processing of relevant data need to comply with the relevant laws, regulations and standards of relevant countries and regions.

A person of ordinary skill in the art may be aware that, in combination with the examples described in the embodiments disclosed in this specification, modules and algorithm operations may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but the implementation goes beyond the scope of this application.

In the several embodiments provided in this application, the disclosed device, apparatus, and method may be implemented in other manners. For example, the described apparatus embodiment is merely exemplary. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network units. Some or all of the modules may be selected according to actual requirements to implement the objectives of the solutions of the embodiments. For example, functional modules in the embodiments of this application may be integrated into one processing module, or each of the modules may exist alone physically, or two or more modules may be integrated into one module.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, applied to a first server, the method comprising:
receiving a request message from a second server, the request message being configured for requesting an audio data stream or a video data stream, and the request message comprising identifier information of a terminal device;
configuring a code rate for transmission of the audio data stream or a code rate for transmission of the video data stream according to the request message and a bandwidth detection result; and
transmitting the audio data stream to the terminal device according to the code rate and a data transmission protocol of the audio data stream, or transmitting the video data stream to the terminal device according to the code rate and a data transmission protocol of the video data stream.

2. The method according to claim 1, wherein the request message is configured for requesting the video data stream, the request message further comprises perspective information, and the configuring a code rate for transmission of the data stream according to the request message and a bandwidth detection result comprises:
configuring a transmission code rate of a first data stream as a first code rate according to the perspective information and the bandwidth detection result, the first data stream being a data stream within a first perspective range threshold; and
configuring a transmission code rate of a second data stream as a second code rate according to the perspective information and the bandwidth detection result, the second data stream being a data stream outside the first perspective range threshold, and the first code rate being greater than the second code rate.

3. The method according to claim 1, wherein the request message is configured for requesting the video data stream, the request message further comprises perspective information and code rate information, and the configuring a code rate for transmission of the data stream according to the request message and a bandwidth detection result comprises:
configuring a transmission code rate of a first data stream as a first code rate according to the perspective information, the code rate information, and the bandwidth detection result, the first data stream being a data stream within a first perspective range threshold; and
configuring a transmission code rate of a second data stream as a second code rate according to the perspective information, the code rate information, and the bandwidth detection result, the second data stream being a data stream outside the first perspective range threshold, and the first code rate being greater than the second code rate.

4. The method according to claim 2 or 3, wherein the video data stream comprises a plurality of video frames, and each of the plurality of video frames comprises an I frame, a B frame, and a P frame, wherein
a data transmission protocol configured for the I frame is a transmission control protocol, and a data transmission protocol configured for the B frame and the P frame is a user datagram protocol.

5. The method according to claim 1, wherein the request message is configured for requesting the audio data stream, the request message comprises code rate information, and the configuring a code rate for transmission of the data stream according to the request message and a bandwidth detection result comprises:
configuring a transmission code rate of the audio data stream as a third code rate according to the code rate information and the bandwidth detection result.

6. The method according to claim 5, wherein the data transmission protocol of the audio data stream is a transmission control protocol.

7. The method according to any one of claims 1 to 6, wherein the audio data stream comprises a time identifier, and the video data stream comprises a time identifier.

8. The method according to any one of claims 1 to 7, further comprising:
detecting a downlink bandwidth of the first server and the terminal device to obtain the bandwidth detection result.

9. A data transmission method, applied to a second server, the method comprising:
receiving, from a terminal device, a first request message configured for requesting a data stream, the first request message comprising motion data of the terminal device;
determining perspective information of the terminal device according to the motion data of the terminal device;
determining code rate information of the data stream according to the perspective information; and
transmitting a second request message to a first server, the second request message comprising the code rate information, the perspective information, and identifier information of the terminal device.

10. The method according to claim 9, wherein the first request message further comprises video code rate information, and
the determining code rate information of the data stream according to the perspective information comprises:
determining the code rate information of the data stream according to the perspective information and the video code rate information.

11. The method according to claim 9, wherein the first request message further comprises audio code rate information and video code rate information, and
the determining code rate information of the data stream according to the perspective information comprises:
determining video code rate information of the data stream according to the perspective information and the video code rate information; and
the method further comprises:
determining audio code rate information of the data stream according to the audio code rate information.

12. A data transmission apparatus, comprising:
a transceiver unit, configured to receive a request message from a second server, the request message being configured for requesting an audio data stream or a video data stream, and the request message comprising identifier information of a terminal device; and
a processing unit, configured to configure a code rate for transmission of the data stream according to the request message and a bandwidth detection result,
the transceiver unit being further configured to transmit the data stream to the terminal device according to the code rate and a data transmission protocol.

13. A data transmission apparatus, comprising:
a transceiver unit, configured to receive, from a terminal device, a first request message configured for requesting a data stream, the first request message comprising motion data of the terminal device; and
a processing unit, configured to determine perspective information of the terminal device according to the motion data of the terminal device;
the processing unit being further configured to determine code rate information of the data stream according to the perspective information; and
the transceiver unit being further configured to transmit a second request message to a first server, and the second request message comprising the code rate information, the perspective information, and identifier information of the terminal device.

14. An electronic device, comprising a processor and a memory, the memory having instructions stored therein, and the instructions, when run by the processor, causing the processor to perform the method according to any one of claims 1 to 8, or perform the method according to any one of claims 9 to 11.

15. A computer storage medium, comprising instructions, the instructions, when run on a computer, causing the computer to perform the method according to any one of claims 1 to 8, or perform the method according to any one of claims 9 to 11.
